Europäisches Patentamt

European Patent Office

Office européen des brevets

(19)

(11) Numéro de publication : **0 478 432 A1**

# (12) DEMANDE DE BREVET EUROPEEN

(21) Numéro de dépôt : **91402523.4**

(51) Int. Cl.⁵ : **H01H 9/04, H02B 1/28**

(22) Date de dépôt : **23.09.91**

(30) Priorité : **24.09.90 FR 9011748**

(43) Date de publication de la demande :
**01.04.92 Bulletin 92/14**

(84) Etats contractants désignés :
**DE GB**

(71) Demandeur : **INGENIERIE BOGA**
**39 à 45, Quai Bérigny**
**F-76400 Fécamp (FR)**

(72) Inventeur : **Lacombe, Jean-Jacques**
**15, avenue Gambetta**
**F-76400 Fecamp (FR)**

(74) Mandataire : **Arnaud, Jean Pierre Alfred**
**Cabinet Arnaud 94 rue Saint-Lazare**
**F-75009 Paris (FR)**

(54) **Boîtier étanche pour élément électrique tel qu'un disjoncteur.**

(57)     L'invention concerne un boîtier étanche pour élément électrique.
     Elle se rapporte à un boîtier étanche comprenant un corps (26) sensiblement rigide, délimitant un flasque (30) sur lequel s'enclenche élastiquement un cordon (34) d'un capot (32) ayant un soufflet (38) et se terminant par un organe de manoeuvre (40) qui peut être formé par une fenêtre transparente (44). Un levier de commande (12) de l'élément électrique commandé (10) tel qu'un disjoncteur, visible par la fenêtre, peut être commandé par application d'un force par l'intermédiaire de l'organe de manoeuvre (40). De cette manière, le disjoncteur (10) est enfermé dans une chambre étanche et est insensible à l'humidité.
     Application à la protection des disjoncteurs et commutateurs contre l'humidité.

EP 0 478 432 A1

Jouve, 18, rue Saint-Denis, 75001 PARIS

*Fig 1*

La présente invention concerne un boîtier étanche de protection destiné à assurer la protection d'éléments électriques contre l'humidité et l'eau. Ce boîtier étanche convient particulièrement bien à des éléments électriques commandés par un organe mobile en translation ayant au moins deux positions de commande.

On sait déjà que des éléments électriques tels que les disjoncteurs comportent un corps rigide et un levier de commande. D'autres éléments électriques analogues sont les commutateurs et les interrupteurs. Ces éléments sont en général commandés par un levier articulé autour d'un axe. Comme la course angulaire du levier est relativement réduite, on considère, dans le présent mémoire, qu'un tel levier est "mobile en translation", cette expression indiquant que l'extrémité de manoeuvre est déplacée par application d'une force dans une seule direction.

On sait que les éléments électriques tels que les disjoncteurs, les commutateurs etc. souffrent de la présence d'eau et d'humidité, soit lorsqu'ils comprennent des éléments métalliques sujets à la corrosion, par exemple à base de fer pouvant présenter de la rouille, soit parce que leurs parties électriques (contacts) risquent d'être affectées par la présence d'eau ou d'humidité. Pour cette raison, on a déjà réalisé des boîtiers destinés à entourer de tels éléments électriques. Ces boîtiers sont sous forme rigides et comportent une porte qui peut être ouverte pour donner accès à l'organe de commande de l'élément électrique.

Les boîtiers connus présentent un certain nombre d'inconvénients. D'abord, l'étanchéité entre la porte et le corps disparaît souvent après quelques manoeuvres, étant donné la difficulté d'obtention d'une bonne étanchéité tout autour d'une porte pivotante. Deuxièmement, l'ouverture de la porte nécessite la présence d'un espace suffisant pour la manoeuvre. Troisièmement, en cas d'urgence, la manoeuvre de l'élément électrique risque d'être retardée car, avant la commande de l'élément électrique, il faut ouvrir la porte, c'est-à-dire la déverrouiller et la faire pivoter. Quatrièmement, si la porte n'a pas une fenêtre transparente, la position de l'élément électrique n'est pas visible. Cinquièmement, si la porte comporte une telle fenêtre, le boîtier a un coût encore plus élevé.

L'invention a pour objet de remédier à ces inconvénients. Elle se rapporte à un boîtier étanche, peu encombrant, directement commandé et permettant l'observation de la position de l'organe de commande. Ce boîtier peut en outre être réalisé simplement, par des procédés de fabrication en grande série si bien que son coût peut être réduit.

Plus précisément, l'invention concerne un boîtier étanche de protection pour élément électrique commandé par un organe mobile en translation, ayant au moins deux positions de commande, ledit élément électrique étant destiné à être raccordé électriquement et supporté par un ensemble de raccordement et de support ; selon l'invention, le boîtier étanche comprend :

– un corps sensiblement rigide de fixation, coopérant de façon étanche avec l'élément électrique à proximité de l'ensemble de raccordement et de support, et

– au moins un capot relativement souple coopérant de façon étanche avec le corps sensiblement rigide et délimitant avec lui une chambre étanche dans laquelle est disposé ledit élément électrique,

– ledit capot relativement souple étant déformable afin qu'une partie de manoeuvre voisine de l'organe mobile de commande de l'élément électrique puisse être déplacée par application d'une force réduite et déplace l'organe mobile de commande d'une position de commande à une autre.

De préférence, le capot relativement souple est formé d'un élastomère moulé, et, par exemple, il a la forme d'un soufflet.

Le capot relativement souple comporte avantageusement une fenêtre permettant l'observation de l'organe mobile de commande et montée de manière étanche sur le capot. La fenêtre comporte par exemple une plaque transparente retenue dans une gorge formée autour d'un orifice du capot.

Le corps a de préférence une forme plate ou de cuvette, délimitant un flasque périphérique, et le capot relativement souple a un bord renforcé délimitant une gorge de logement du flasque.

Il est avantageux que le capot sensiblement rigide soit fixé à l'ensemble de raccordement et de support en position telle que la connexion électrique de l'élément électrique se trouve à l'intérieur de la chambre étanche.

Dans un mode de réalisation, le corps et le capot sont délimités, de deux côtés opposés, par deux faces sensiblement planes et parallèles afin que plusieurs boîtiers étanches puissent être juxtaposés.

Il est avantageux que le corps comporte un joint d'étanchéité à proximité de sa partie de coopération avec l'élément électrique et l'ensemble de raccordement et de support.

Dans des modes de réalisation, le corps est formé en plusieurs éléments, et/ou le le capot relativement souple est formé en plusieurs éléments.

D'autres caractéristiques et avantages de l'invention ressortiront mieux de la description qui va suivre, faite en référence aux dessins annexés sur lesquels :

la figure 1 est une vue en partie en coupe et en partie en élévation latérale d'un élément électrique logé dans un boîtier étanche selon l'invention ; et

la figure 2 est une vue en élévation latérale, en coupe partielle, de l'élément électrique et du boîtier de la figure 1, par le plan repéré par la ligne 2-2 sur la figure 1.

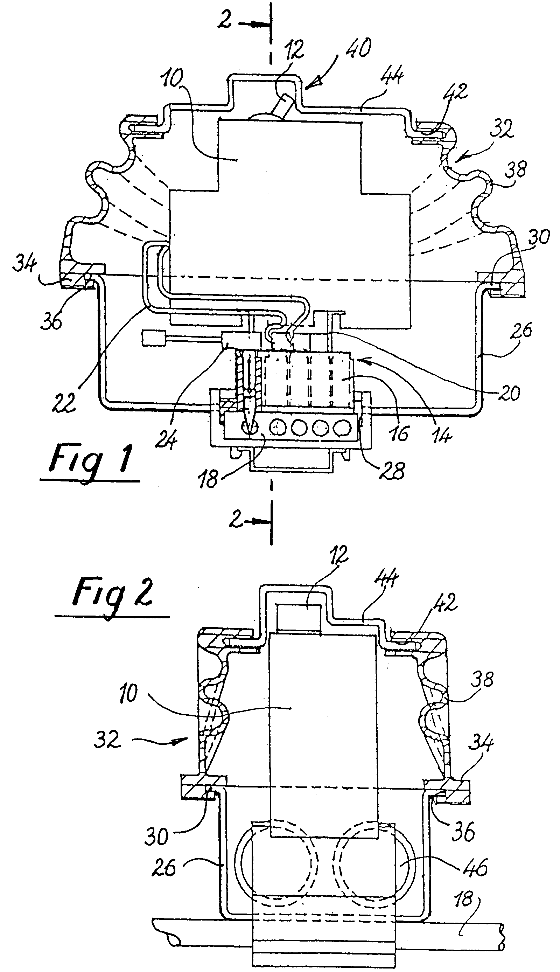

La figure 1 est une coupe partiellement en élévation latérale d'un boîtier étanche selon l'invention contenant un disjoncteur. La figure 2 est une coupe, en élévation latérale partielle, de la figure 1.

Un disjoncteur 10 a un corps et il est commandé par un organe de commande mobile en translation constitué par un levier 12 articulé autour d'un axe perpendiculaire au plan de la figure 1. Dans le présent mémoire, l'expression "mobile en translation" indique simplement que l'organe de commande de l'élément électrique constitué par le disjoncteur 10 est manoeuvré par une force appliquée ponctuellement. Elle distingue ce type d'organe de commande de ceux qui travaillent en rotation, c'est-à-dire dont la commande nécessite l'application d'un couple.

Le disjoncteur 10 est raccordé par un ensemble 14 de raccordement et de support, ayant un corps 16, à un câble plat 18 d'alimentation. Cet ensemble 14 comprend, en plus du corps 16 de raccordement, un organe 20 de fixation qui assure la fixation mécanique du disjoncteur 10. Le corps 16 est utilisé pour le raccordement électrique et, par exemple, on a représenté la connexion de fils 22 de phase et de neutre et d'une fiche de terre 24.

Les éléments décrits jusqu'à présent sont bien connus, et ils ne sont considérés qu'à titre d'exemple d'application de l'invention.

Le boîtier étanche selon l'invention comporte un corps sensiblement rigide 26 et un capot relativement souple 32. Le corps 26 a une forme de cuvette et il comporte, à sa partie inférieure, une ouverture 28 permettant son accrochage et sa retenue entre l'ensemble de raccordement et de support 14 du disjoncteur et le câble d'alimentation 18. De façon avantageuse, le corps 26 coopère avec ces dispositifs de manière pratiquement étanche afin que l'eau et l'humidité ne puissent pas pénétrer par cette ouverture. Le corps comporte aussi un flasque périphérique 30 tourné vers l'extérieur du corps 26.

Un capot relativement souple 32 comporte, à une extrémité, un cordon renforcé 34 délimitant une gorge interne 36 destinée à être retenue élastiquement sur le flasque 30 du corps 26. Le corps 38 du capot 32 a la forme d'un soufflet ayant de préférence des nervures recourbées comme indiqué en trait interrompu sur la figure 1 ; ces nervures arrondies facilitent la manoeuvre. Dans sa partie opposée au corps 26, le capot comprend un organe 40 de manoeuvre destiné à coopérer avec le levier 12 de commande du disjoncteur 10. Dans le mode de réalisation représenté, l'organe de manoeuvre est formé par une protubérance d'une fenêtre transparente 44 logée dans une gorge 42 d'une ouverture du capot 32, du côté opposé au cordon 34, la protubérance délimitant vers l'intérieur une cavité destinée à loger le levier 12 de commande. Dans une variante, l'organe de manoeuvre peut être simplement formé par une partie du capot, de préférence épaissie.

Le corps 26 et le capot 32 délimitent ensemble une chambre étanche, grâce à la coopération étanche du flasque 30 et de la gorge 36 d'une part et de la fenêtre 44 et de la gorge 42 d'autre part. De cette manière et étant donné l'étanchéité réalisée autour de l'ouverture 28, l'humidité ne peut pas pénétrer à l'intérieur du boîtier étanche.

Lorsque le disjoncteur doit être commandé depuis l'extérieur, l'opérateur voit la position du levier 12 à travers la fenêtre 44 et sait donc dans quel sens il doit déplacer le levier. Il applique alors une force à l'organe 40 de manoeuvre, dans le sens convenable, afin qu'il fasse basculer le levier 12. Il peut se rendre compte facilement du fait que le levier 12 a été manoeuvré, par observation par la fenêtre 44.

Dans le mode de réalisation précédent, le capot 24 est formé d'une matière rigide, par exemple, d'une matière plastique moulée ou d'un flan métallique formé par emboutissage et poinçonnage. Le capot 32 est formé d'un élastomère quelconque, par exemple un caoutchouc de polyuréthanne, de "Néoprène", etc. Le capot 32, dans un mode de réalisation avantageux, a une épaisseur relativement grande au niveau du cordon épaissi 34 et de la fenêtre 44, afin qu'il assure l'étanchéité et facilite la manoeuvre, et le reste du corps 38 a une épaisseur réduite, de l'ordre de 1 mm par exemple, afin qu'il garde une grande souplesse permettant la manoeuvre du levier 12 sans application d'une force très supérieure à celle qui est nécessaire à la manoeuvre du levier 12.

Le boîtier qu'on vient de décrire assure l'étanchéité de manière fiable et pendant longtemps, car les différents éléments qui coopèrent de façon étanche ne sont jamais déplacés les uns par rapport aux autres après le montage initial, contrairement à une porte qui doit être ouverte et fermée à chaque manoeuvre. L'espace nécessaire au montage du boîtier étanche, en avant du disjoncteur, est très réduit étant donné que l'organe de manoeuvre 40 a une faible épaisseur au-dessus du levier de commande 12. En cas d'urgence, le levier de commande 12 peut être manoeuvré instantanément, aussi vite qu'en l'absence du boîtier. La position du levier de commande 12 est facilement visible grâce à la fenêtre 44. Enfin, le boîtier étanche est relativement peu coûteux. En effet, il comprend des éléments simples qui peuvent être réalisés par utilisation des techniques de fabrication en grande série, et le montage des différents éléments les uns sur les autres est très simple. Le corps 26 du boîtier laisse beaucoup de place pour réaliser les connexions du disjoncteur. Le capot 32, ayant sa fenêtre, est ensuite monté sur le corps 26, lorsque les raccordements du disjoncteur 10 ont été effectués. Le démontage et le remontage sont possibles.

Bien qu'on ait décrit un mode de réalisation particulier de l'invention, celle-ci n'est pas limitée à ce boîtier et concerne de nombreuses variantes. D'abord, bien qu'on ait représenté un corps 26 de boîtier sous forme d'une cuvette, il peut avoir simplement la forme d'une plaque, si bien que l'accès au dispositif 14 de raccordement et de fixation est encore plus facile. Bien qu'on ait représenté un flasque 30 tourné du côté opposé à celui du disjoncteur 10, le flasque peut aussi être parallèle à ce disjoncteur, le capot étant alors monté par enfoncement du cordon 34 vers le corps 26. Cette disposition est cependant moins avantageuse que celle qui est représentée sur les dessins étant donné que le capot 32 peut être plus facilement arraché. Il peut être alors avantageux d'utiliser une fixation supplémentaire, par exemple un collage du corps et du capot.

Bien qu'on ait représenté le corps 26 en une seule pièce, il peut être formé par plusieurs éléments coopérant convenablement. En particulier, le corps 26 peut comporter un dispositif spécial placé à proximité de l'ouverture 28 et destiné à coopérer avec un type particulier d'ensemble 14 de raccordement et de fixation. Bien qu'on ait représenté le corps 26 placé entre le câble 18 et le corps 16 de raccordement, il peut aussi être placé entre le corps 16 et le disjoncteur 10. La coopération au niveau de l'ensemble de raccordement et de fixation dépend évidemment du type particulier d'ensemble de raccordement et de fixation utilisé. Toutes les variantes entrent dans le cadre de l'invention, du moment que l'humidité ne peut pas pénétrer facilement.

La figure 2 représente des presse-étoupe 46 permettant le passage étanche de câbles destinés à pénétrer dans le boîtier étanche, le cas échéant. Il s'agit d'une caractéristique purement éventuelle, indiquant que l'invention a de nombreuses applications.

On note sur la figure 2 que les côtés du boîtier étanche sont disposés dans des plans sensiblement parallèles aux côtés du disjoncteur 10 si bien que plusieurs disjoncteurs logés dans plusieurs boîtiers étanches peuvent être placés les uns à côté des autres, avec un encombrement réduit. Chaque disjoncteur comporte son propre boîtier étanche.

Bien qu'on ait représenté, sur la figure 1, un dispositif 14 de fixation et de raccordement qui coopère avec un câble plat 18 d'alimentation en énergie électrique, il ne s'agit que d'un mode de réalisation et de nombreuses autres alimentations sont possibles, notamment par les câbles ordinaires ayant des conducteurs torsadés.

Bien entendu, bien qu'on ait représenté un disjoncteur 10, de nombreux autres éléments électriques peuvent être commandés, du moment que leur fonctionnement nécessite un organe mobile en translation, c'est-à-dire déplacé par application ponctuelle d'une force. On peut citer par exemple les commutateurs et interrupteurs.

## Revendications

1. Boîtier étanche de protection pour élément électrique (10) commandé par un organe (12) mobile en translation et ayant au moins deux positions de commande, ledit élément électrique étant destiné à être raccordé électriquement et supporté par un ensemble de raccordement et de support (16), ledit boîtier étanche étant caractérisé en ce qu'il comprend :

– un corps (26) sensiblement rigide de fixation, coopérant de façon étanche avec l'élément électrique à proximité de l'ensemble de raccordement et de support (16), et

– au moins un capot relativement souple (32) coopérant de façon étanche avec le corps sensiblement rigide, délimitant avec lui une chambre étanche dans laquelle est disposé ledit élément électrique (10), et ayant un organe de manoeuvre (40),

– ledit capot relativement souple (32) étant déformable afin que l'organe de manoeuvre (40), qui est destiné à être proche de l'organe mobile de commande de l'élément électrique, puisse être déplacé par application d'une force ponctuelle et déplace alors l'organe mobile de commande (12) d'une position de commande à une autre.

2. Boîtier étanche selon la revendication 1, caractérisé en ce que le capot relativement souple (32) est formé d'un élastomère moulé.

3. Boîtier étanche selon la revendication 2, caractérisé en ce que le capot relativement souple (32) a la forme d'un soufflet.

4. Boîtier étanche selon l'une quelconque des revendications précédentes, caractérisé en ce que le capot relativement souple (32) comporte une fenêtre (44) permettant l'observation de l'organe mobile de commande (12) et montée de manière étanche sur le capot.

5. Boîtier selon l'une des revendications 3 et 4, caractérisé en ce que l'organe de manoeuvre (40) est constitué par une partie du soufflet ou de la fenêtre.

6. Boîtier étanche selon l'une quelconque des revendications précédentes, caractérisé en ce que le corps (26) a une forme plate ou de cuvette, délimitant un flasque périphérique (30), et le capot relativement souple (26) a un cordon (34) délimitant une gorge (26) de logement du flasque.

7. Boîtier étanche selon l'un quelconque des revendications précédentes, caractérisé en ce que le corps sensiblement rigide (26) est fixé à l'ensemble de raccordement et de support (16) en position telle que la connexion électrique de l'élément électrique (10) se trouve à l'intérieur de la chambre étanche.

8. Boîtier étanche selon l'une quelconque des revendications précédentes, caractérisé en ce que le corps (26) et le capot (32) sont délimités, de deux côtés opposés, par deux faces sensiblement planes et parallèles afin que plusieurs boîtiers étanches puissent être juxtaposés.

9. Boîtier étanche selon l'une quelconque des revendications précédentes, caractérisé en ce que le corps (26) comporte un joint d'étanchéité à proximité de sa partie de coopération (28) avec l'élément électrique (10) et l'ensemble de raccordement et de support (16).

10. Boîtier étanche selon l'une quelconque des revendications précédentes, caractérisé en ce que l'élément électrique commandé (10) est un disjoncteur ou un commutateur.

Fig 1

Fig 2

Office européen **RAPPORT DE RECHERCHE EUROPEENNE** Numero de la demande
des brevets

EP 91 40 2523

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-616 393 (MOLINS MACHINE COMPANY) <br> * page 3, ligne 17 - page 4, ligne 10; figures 1-3 * <br> --- | 1-3 | H01H9/04 <br> H02B1/28 |
| A | US-A-3 668 938 (DIMITRY) <br> * le document en entier * <br> --- | 1 | |
| A | FR-A-2 435 841 (TIM S.A.) <br> * page 2, ligne 27 - page 3, ligne 16; figure 1 * <br><br> ----- | 1 | |

**DOMAINES TECHNIQUES RECHERCHES (Int. Cl.5)**

H01H
H02B

Le présent rapport a été établi pour toutes les revendications

| Lieu de la recherche | Date d'achèvement de la recherche | Examinateur |
|---|---|---|
| LA HAYE | 05 NOVEMBRE 1991 | DESMET W.H.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................
& : membre de la même famille, document correspondant

EPO FORM 1503 03.82 (P0402)